Europäisches Patentamt

European Patent Office

Office européen des brevets

(11) Veröffentlichungsnummer : **0 311 595 B1**

(12) **EUROPÄISCHE PATENTSCHRIFT**

(45) Veröffentlichungstag der Patentschrift :
18.12.91 Patentblatt 91/51

(51) Int. Cl.$^5$ : **F16K 31/60**

(21) Anmeldenummer : **88890246.7**

(22) Anmeldetag : **26.09.88**

(54) **Griffhebel für sanitäre Armaturen.**

(30) Priorität : **24.09.87 AT 2427/87**

(43) Veröffentlichungstag der Anmeldung :
**12.04.89 Patentblatt 89/15**

(45) Bekanntmachung des Hinweises auf die
Patenterteilung :
**18.12.91 Patentblatt 91/51**

(84) Benannte Vertragsstaaten :
**AT BE CH DE ES FR GB GR IT LI NL SE**

(56) Entgegenhaltungen :
**BE-A- 520 174**
**DE-A- 1 750 287**
**FR-A- 2 481 405**

(73) Patentinhaber : **IDEAL-STANDARD GMBH**
**Euskirchener Strasse 80**
**W-5300 Bonn 1 (DE)**

(72) Erfinder : **Steffes, Rudolf**
**Hauptstrasse 54**
**W-5569 Muckeln (DE)**

(74) Vertreter : **Puchberger, Rolf, Dipl. Ing. et al**
**Patentanwälte, Dipl. Ing. Georg Puchberger**
**Dipl. Ing. Rolf Puchberger Dipl. Ing. Peter**
**Puchberger Singerstrasse 13 Postfach 55**
**A-1010 Wien (AT)**

## Beschreibung

Die Erfindung betrifft einen Griffhebel für sanitäre Armaturen gemäß dem Oberbegriff des Anspruches 1.

Für viele Anwendungszwecke werden sanitäre Wasserarmaturen mit Einhebelmischern erwünscht, bei denen die Hebelarmlänge sehr groß ist, z.B. in Krankenhäusern, vor Operationssälen, weil bei langen Griffhebeln die Betätigung über den Ellbogen erfolgen kann. Derartige lange Hebelarme bringen jedoch Probleme mit sich, insbesondere hinsichtlich der Gefahr des Spindelbruches und die Möglichkeit der Eigenöffnung bei Wandmontage.

Eine mögliche Lösung dieses Problemes ist es, zwischen der Griffhülse und dem Griffadapter eine Rutschkupplung vorzusehen, wie es z.B. in der DE-A-1750287 beschrieben ist, nämlich daß eine auf den Spindelschaft aufschiebbare Mitnehmerbuchse durch eine Innenprofilierung formschlüssig mit dem Spindelschaft gekuppelt wird, die stirnseitig zwischen Reibscheiben oder Reibflächen in der Axialbohrung des Drehgriffes durch eine das Drehmoment der Rutschkupplung einstellende Hohlschraube befestigt ist.

Dabei sind die Reibscheiben oder -ringe jene Teile, die am meisten einer Abnutzung unterworfen sind. Um sie auszutauschen muß bei der Ausführung gemäß der DE-A-1750287 der Griff vollständig in seine Einzelteile zerlegt werden. Auch das Austauschen des gesamten Griffes mit Griffhülse, Griffadapter und Rutschkupplung gestaltet sich kompliziert.

Aufgabe der vorliegenden Erfindung ist es, einen Griff für sanitäre Armaturen zu schaffen, der es ermöglicht, den Austausch des Reibringes ohne Demontage des gesamten Griffes und Zerlegung desselben durchzuführen und der als Gesamtheit einfach austauschbar ist. Erfindungsgemäß wird zur Lösung dieser Aufgabe eine Ausführung des Griffes gemäß dem Kennzeichen des Anspruches 1 vorgeschlagen.

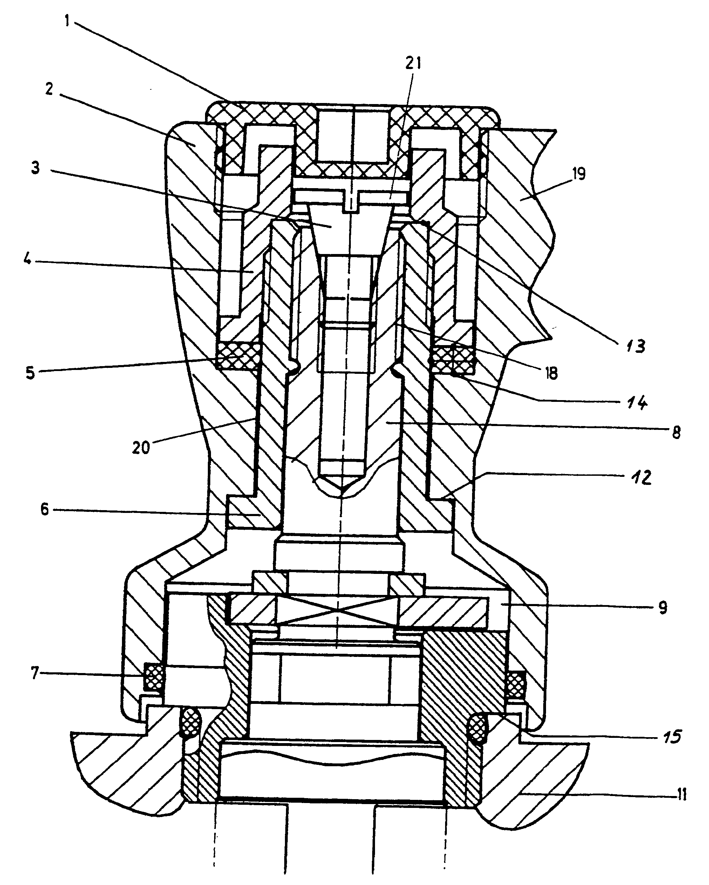

Die angeschlossene Zeichnung zeigt eine Ausführungsform der Erfindung. Die in der einzigen Figur dargestellte Oberteilkartusche hat in üblicherweise ein Kopfstück 9, das über eine Fläche 15 an einem Tragekörper 11 anliegt und an diesem befestigt ist. In das Kopfstück 9 erstreckt sich eine Spindel 8 zum Öffnen und Schließen des Wasserzulaufes. Die Spindel 8 besitzt an ihrem oberen Teil Kerben 18. Über die Spindel 8 wird ein Griffadapter 6 gestülpt, der in seinem oberen Teil mit der Kerbverzahnung der Spindel 8 in Eingriff steht und dessen unterer Teil unter geringer Toleranz die Spindel 8 führt. Außerhalb des Griffadapters 6 ist dann die Griffhülse 2 vorgesehen, die mit dem Griff 19 einstückig ist. Die Griffhülse 2 besitzt einen Ringflansch 20, auf dessen oberer Schulter 14 ein Ring 5 aus einem elastischen Material, also ein O-Ring oder eine Gummischeibe, liegt. Mit dem Griffadapter 6 ist eine Kupplungshülse 4 verschraubt, die den Ring 5 fest an die Schulter 14 preßt. der dadurch entstehende Druck wirkt auch auf die untere Schulter 12 des Ringflansches 20 und es wird eine Reibfläche gebildet. Die Kupplungshülse 4 wird nach Einlegen des Ringes auf 8 Nm auf der obersten Fläche 13 des Griffadapters 6 angezogen. Die dadurch gebildete Rutschkupplung bewirkt ein Überdrehmoment von ca. 3 Nm, wobei das Anzugsmoment von 8 Nm verhindert, daß sich die Kupplungshülse 4 beim Überdrehen des Griffes 19 löst. Die Überdrehkraft ist abhängig von den Toleranzen des Preßmaßes für den Ring 5. Diese werden jedoch so ausgelegt, daß sich eine Toleranz von 2 Nm ergibt. Die Griffhülse 2 ist überdies noch durch eine Dichtung 7 gegenüber dem Kopfstück 9 abgedichtet. Durch das Anpressen des Ringes 5 auf die Flächen 14 und den Einbau dieser Dichtung 7 ist die Reibfläche von oben und unten abgedichtet. Dies verhindert ein Eindringen von Schmutz und Seife, die das Reibmoment verändern könnten.

Die Spindel 8 ist hinter ihrem schwächsten Querschnitt durch den Griffadapter 6 abgestützt. Der Griffhebel 19 wird als einteiliges Bauelement auf den Griffadapter 6 aufgesteckt und durch eine entsprechend genaue Bohrung am Kopfstück 9 abgestützt. Eine Klemmschraube 3 ist von einem Verschluß 1 überdeckt und verhindert durch einen überstehenden Rand ein Abgleiten des Griffhebels 19 bei Lockerung nach oben. Der untere Teil der Griffhülse 2 umgreift das Kopfstück 9 glockenartig und liegt dabei eng an den äußeren Flächen des Kopfstückes 9 an. Die zwischen diesen Flächen vorgesehene Dichtung 7 gibt nicht nur eine Abdichtung, sondern gibt dem Hebel bei Wandmontage auch einen Halt, so daß er sich nicht von alleine öffnet.

Es besteht die Möglichkeit, den gesamten Griff als Austauscheinheit mit dem erwähnten Drehmoment zu montieren. Dazu braucht die Griffhülse samt Griffadapter nur noch aufgesteckt zu werden und dann mittels der Klemmschraube 3 befestigt werden. Das Ausrichten des Hebels, z.B. auf 90°, erfolgt einfach durch Ausnutzung der Rutschkupplung. Das Überdrehmoment kann nachträglich durch Einlegen flacher Scheiben auf dem Ring 5 beeinflußt werden, z.B. bei Abnutzung.

## Patentansprüche

1. Griffhebel für sanitäre Armaturen, der mit einer Griffhülse (2) einstückig ist, wobei die Griffhülse (2) mit einer Spindel (8) für die Betätigung der Armatur über einen Griffadapter (6) verbunden ist und zwischen der Griffhülse (2) und dem Griffadapter (6) eine Rutschkupplung (4, 5, 14, 12) vorgesehen ist, dadurch gekennzeichnet, daß die Griffhülse (2) einen Ringflansch (20) aufweist, auf dessen oberer Schulter (14) ein Ring (5) aus elastischem Material (Dichtring, Gummiring) als Kupplungselement liegt, das durch eine auf dem Griffadapter (6) verschraubte Kupplungshülse (4) angepreßt ist, und dessen untere Schulter (12) direkt mit einer Reibfläche des Griffadapters (6) in Eingriff steht.

2. Griffhebel nach Anspruch 1, dadurch gekennzeichnet, daß die Spindel (8) am oberen Ende eine Kerbverzahnung (18) hat, die mit dem oberen Teil des Griffadapters (6) in Eingriff ist, dessen unterer Teil genau an den Durchmesser der Spindel (8) angepaßt ist.

3. Griffhebel nach Anspruch 1, dadurch gekennzeichnet, daß das untere Ende der Griffhülse (2) das Kopfstück (9) der Armatur glockenförmig umgreift und an der Außenfläche des Kopfstückes anliegt und zusätzlich eine eingepreßte Dichtung (7) vorhanden ist.

## Claims

1. A handle lever for sanitary valves which is integral with a handle sleeve (2), wherein the handle sleeve (2) is connected to a spindle (8) for actuation of the valve by way of a handle adaptor (6) and a slipping coupling (4, 5, 14, 12) is provided between the handle sleeve (2) and the handle adaptor (6) characterised in that the handle sleeve (2) has an annular flange (20) having an upper shoulder (14) on which a ring (5) of elastic material (sealing ring, rubber ring) lies as a coupling element, which is pressed against by a coupling sleeve (4) which is screwed on the handle adaptor (6), while the lower shoulder (12) of the annular flange is directly in engagement with a frictional surface of the handle adaptor (6).

2. A handle lever according to claim 1 characterised in that at the upper end the spindle (8) has splines (18) in engagement with the upper portion of the handle adaptor (6), the lower portion of which is precisely adapted to the diameter of the spindle (8).

3. A handle lever according to claim 1 characterised in that the lower end of the handle sleeve (2) embraces the head portion (9) of the valve in a bell-like configuration and bears against the outside surface of the head portion, and in addition there is a seal (7) which is pressed therein.

## Revendications

1. Poignée de manoeuvre pour un robinet sanitaire, cette poignée formant une pièce unique avec une douille (2) qui la porte et qui est reliée par l'intermédiaire d'un adaptateur (6) à un pivot (8) qui permet le fonctionnement du robinet, un accouplement glissant (4, 5, 14, 12) étant prévu entre la douille (2) de la poignée et l'adaptateur (6) de celle-ci, caractérisée en ce que la douille (2) de la poignée comporte une collerette annulaire (20) qui présente un épaulement supérieur (14) sur lequel est en appui une bague (5) en matière élastique (bague d'étanchéité, bague en caoutchouc) constituant un élément d'accouplement, comprimé contre l'épaulement par une douille d'accouplement (4) vissée sur l'adaptateur (6) de la poignée, l'épaulement inférieur (12) de la collerette (20) portant directement sur une surface de frottement de l'adaptateur (6) de la poignée.

2. Poignée de manoeuvre selon la Revendication 1, caractérisée en ce que le pivot (8) présente une extrémité supérieure cannelée (18) engagée dans la partie supérieure de l'adaptateur (6) de la poignée, dont la partie inférieure est exactement ajustée au diamètre du pivot (8).

3. Poignée de manoeuvre selon la Revendication 1, caractérisée en ce que l'extrémité inférieure de la douille (2) de la poignée constitue une cloche qui coiffe la tête (9) du robinet et qui est appliquée contre la face externe de cette tête, un joint comprimé (7) étant en outre prévu en cet endroit.

EP 0 311 595 B1

4